# EUROPÄISCHE PATENTSCHRIFT

(11) **EP 2 029 320 B1**
(45) Veröffentlichungstag und Bekanntmachung des Hinweises auf die Patenterteilung: **17.03.2010**
(21) Anmeldenummer: 07725244.3
(22) Anmeldetag: 15.05.2007
(51) Int. Cl.: B23Q 11/00

(54) **HANDBETÄTIGTES BOHR- ODER FRÄSGERÄT MIT EINER ABSAUGVORRICHTUNG**
MANUAL DRILLING OR MILLING IMPLEMENT WITH A SUCTION DEVICE
APPAREIL DE PERÇAGE OU DE FRAISAGE MANUEL MUNI D'UN SYSTÈME D'ASPIRATION

(30) Priorität: 19.05.2006 DE 202006008068 U
(43) Veröffentlichungstag der Anmeldung: 04.03.2009
(73) Patentinhaber: Dagn, Josef, A-6345 Kössen (AT)
(72) Erfinder: Dagn, Josef, A-6345 Kössen (AT)
(74) Vertreter: Klingseisen, Franz
(86) Internationale Anmeldenummer: PCT/EP2007/004327
(87) Internationale Veröffentlichungsnummer: WO 2007/134759

(56) Entgegenhaltungen:
- DE-A1- 3 509 199
- JP-A- 55 096 208
- US-A- 3 850 254
- US-A- 6 146 066

## Beschreibung

Die Erfindung betrifft ein handbetätigtes Bohr oder Fräsgerät mit einer Absaugvorrichtung, wie beispielsweise einen Akkubohrer oder -fräser.

Bei Noteinsätzen der Feuerwehr ist es für die Rettung und Versorgung von Personen beispielsweise bei einem Kfz-Unfall wichtig, möglichst schnell eine große Durchtrittsöffnung in die Windschutzscheibe oder in die Heckscheibe schneiden zu können, um zu den zu versorgenden Personen zu gelangen, wenn die Türen blockiert sind. Hierbei muss anfallender Glasstaub, der zu Verletzungen führen kann, vermieden werden.

Aus US 6 146 066 A ist ein zylindrisches Bohrgerät mit einem Bohrer auf der einen Stirnseite und einem Sammelbehälter an dem in Achsrichtung gegenüberliegenden Ende des Bohrgerätes bekannt.

DE 35 09 199 A1 beschreibt eine auf eine Bohrmaschine aufsetzbare Absaugvorrichtung, bei der ein Lüfterrotor über eine Nabe am Bohrer der Bohrmaschine gehalten ist oder der Lüfterrotor über eine Endhülse mit dem Futter der Bohrmaschine verbunden ist.

US 3 850 254 A zeigt eine Bohrmaschine, an der exzentrisch zum Bohrfutter eine Absaugvorrichtung angebracht ist, deren Lüfterrad über ein Getrieberad angetrieben wird, das über ein Reibrad vom Bohrfutter in Drehung versetzt wird.

Aufgabe der Erfindung ist es, ein handliches Bohr- bzw. Fräsgerät für Noteinsätze bereitzustellen, mittels dem eine Durchtrittsöffnung aus Glasflächen ausgeschnitten werden kann, ohne dass Glasstaub die Rettungsarbeiten behindert.

Dies wird erfindungsgemäß durch ein Gerät nach dem Anspruch 1 erreicht. Durch das auf das Bohr- oder Fräsgerät aufgesetzte Gehäuse mit einem Radialgebläserad, das durch den Bohrer bzw. Fräser angetrieben wird, wird eine wirksame Absaugung des Glasstaubs erreicht, der beim Ausschneiden einer Durchtrittsöffnung in einer Glasscheibe anfällt, wobei eine kompakte und handliche Bauform des Gerätes erreicht wird.

Eine beispielsweise Ausführungsform der Erfindung wird nachfolgend anhand der Zeichnung näher erläutert. Es zeigen
- Fig. 1: in einer Draufsicht und in einer Seitenansicht ein Akkubohr- bzw. ein handbetätigtes Fräsgerät mit der Absaugvorrichtung,
- Fig. 2: eine Draufsicht auf die Absaugvorrichtung,
- Fig. 3: eine Seitenansicht der Absaugvorrichtung,
- Fig. 4: einen Teilschnitt längs der Linie G-G in Fig. 2,
- Fig. 5: eine auseinander gezogene Ansicht der Bauteile der Absaugvorrichtung,
- Fig. 6: die Arbeitsweise des Gerätes, und
- Fig. 7: eine perspektivische Ansicht eines Bohrers bzw. Fräsers..

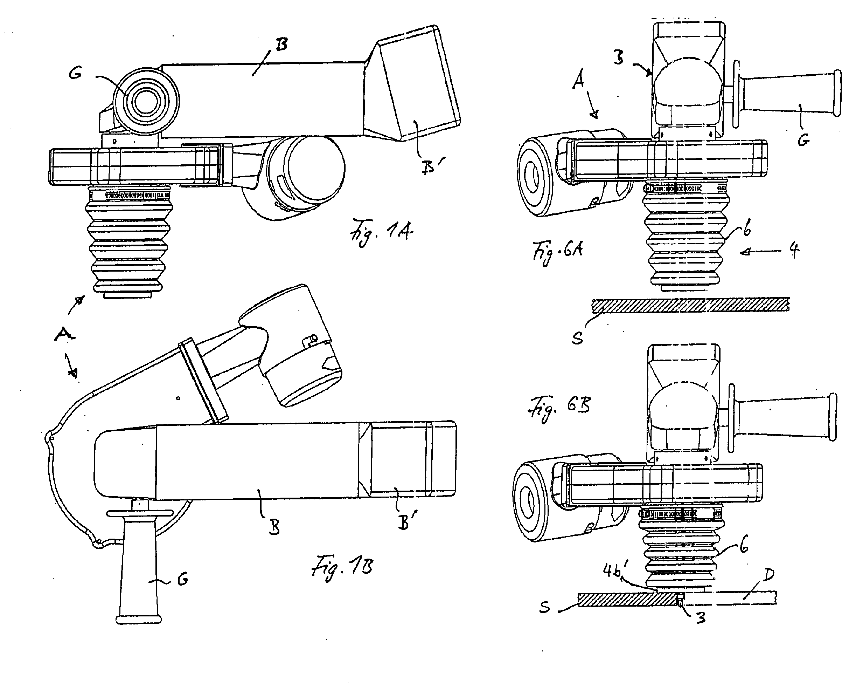

Fig. 1A und 1B zeigen ein Bohr- bzw. Fräsgerät B, das von einem Akku B' angetrieben wird und auf dem eine Absaugvorrichtung A angebracht ist. Mit G ist ein Handgriff des Gerätes bezeichnet.

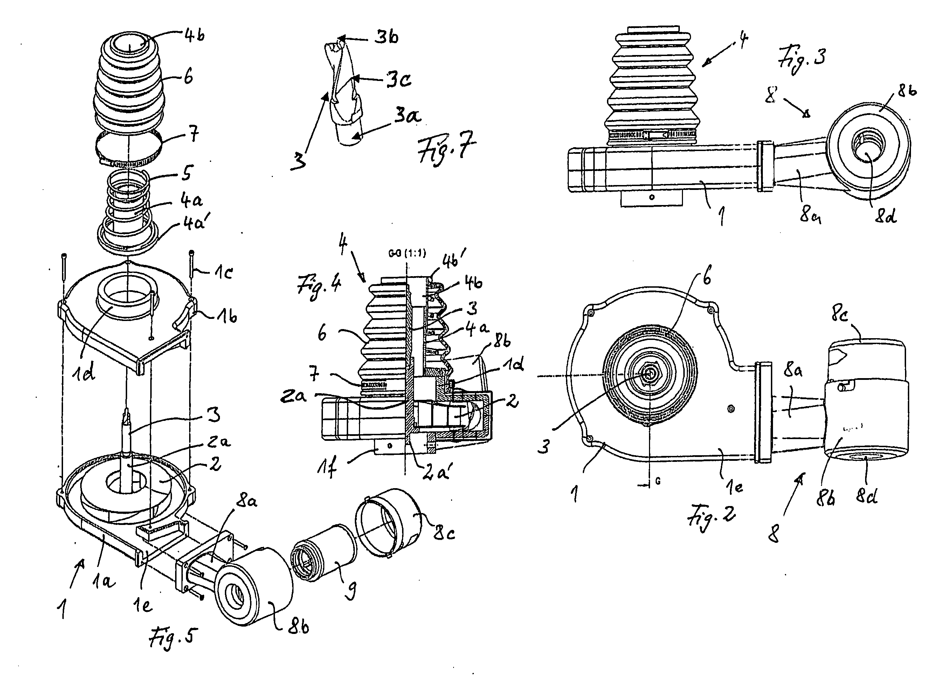

In den Fig. 2 bis 5 ist mit 1 ein etwa scheibenformiges Gehäuse bezeichnet, das bei dem dargestellten Ausführungsbeispiel aus zwei Gehäuseteilen 1a und 1b besteht, die durch Schrauben 1c miteinander verbunden sind. In dem Gehäuse 1 ist ein Radialgebläserad 2 drehbar gelagert, wie dies Fig. 4 und 5 zeigen. Durch die mittige Öffnung des Radialgebläserades 2 erstreckt sich ein Bohrer bzw. Fräser 3. An der in Fig. 5 oberen Gehäusehälfte 1b ist konzentrisch zum Fräser 3 ein Ansatz 1d angeformt, auf dem ein teleskopartig verstellbares Absaugrohr 4 befestigt ist.

Das Absaugrohr 4 weist ein Rohrstück 4a mit einem Flansch 4a' auf einer Seite auf, der auf dem Ansatz 1d des Gehäuses aufliegt und an dem sich eine Schraubenfeder 5 abstützt, deren oberes Ende am Ende eines Gummibalgs 6 anliegt, dessen oberes Ende mit einem Rohrstück 4b verbunden ist, das einen Bund 4b' aufweist, an dem der Gummibalg 6 befestigt ist. Das untere Ende des Gummibalgs 6 ist beispielsweise durch einen Schlauchbinder 7 auf dem rohrförmigen Ansatz 1d des Gehäuses befestigt.

In der Bereitstellung in Fig. 6A deckt das ausgefahrene Absaugrohr 4 die Spitze des Fräsers 3 ab. Beim Ansetzen des Gerätes an einer Glasscheibe S mittels des Bundes 4b' und Andrücken wird das äußere Rohrstück 4b in Fig. 4 entgegen der Kraft der Feder 5 über das Rohrstück 4a geschoben, sodass die Spitze des Fräsers 3 freiliegt und in die Glasscheibe S über einen aktiven Schliff 3b (Fig. 7) des Fräsers eindringen kann, wie Fig. 6B zeigt, wobei bei D eine durch den Fräser 3 ausgeschnittene Durchtrittsfläche in der Glasscheibe wiedergegeben ist.

Fig. 7 zeigt einen Fräser 3, der in ein Gewindestück 3a eingelötet ist. Die Spitze des Fräsers ist mit dem aktiven Schliff 3b versehen, der ohne Verrutschen über ein leichtes Andrücken des Gerätes an die Glasfläche in diese eindringt. Die offenen Windungen 3c des aktiven Schliffes transportieren die Glassplitter in das Rohrstück 4a und von dort gelangen sie über das Gebläserad 2 in den Auffangbehälter 8.

Wie Fig. 4 zeigt, ist die Unterseite des unteren Gehäuseteils 1a bzw. die Unterseite des Radialgebläserads 2 geschlossen, sodass der beim Fräsen entstehende Glasstaub durch das Absaugrohr 4 mittels des Radialgebläserads 2 abgesaugt wird. Auf dem Umfang des scheibenförmigen Gehäuses 1 ist ein radial abstehender Ansatz 1e ausgebildet, an den ein Auffangbehälter 8 angeflanscht ist, der bei dem dargestellten Ausführungsbeispiel aus Kunststoff gefertigt ist und einen Kanalabschnitt 8a im Anschluss an den Gehäuseansatz 1e aufweist, auf dessen gegenüberliegender Seite ein etwa rohrförmiges Gehäuse 8b angeformt ist, das auf einer Seite offen und durch eine vorzugsweise transparente Kappe 8c abgedeckt ist, die beispielsweise mittels eines Bajonettverschlusses mit dem rohrförmigen Gehäuse 8b verbunden werden kann. In dem Auffangbehälter 8 ist ein rohrförmiger Filter 9 so angeordnet, dass die vom Radialgebläse 2 in den Auffangbehälter eingeführte Luft den Filter 9 von außen umströmt, sodass sich Glasstaub auf dem Außenumfang absetzt, wobei der Füllgrad des Auffangbehälters durch die transparente Kappe 8c sichtbar ist. In Fig. 2 ist die obere Stirnseite des Filters 9 geschlossen ausgebildet, während die untere Stirnseite offen ist und mit einer Austrittsöffnung 8d in dem Gehäuse 8b in Verbindung steht, durch die die vom Glasstaub gereinigte Luft austritt.

Zum Schutz gegen den scharfkantigen Glasstaub kann das Radialgebläserad 2 mit einer Keramikbeschichtung versehen sein. Ebenso wird das Gehäuse 1 aus einem entsprechend widerstandsfähigen Aluguss gefertigt.

Auf der Unterseite des unteren Gehäuseteils 1 a ist ein rohrförmiger Ansatz 1 f ausgebildet, der mit radialen Gewindebohrungen versehen sein kann, um die Absaugvorrichtung A auf dem Bohr- bzw. Fräskopf des Gerätes B zu befestigen.

Wie Fig. 4 zeigt, ist der Fräser 3 mit dem Radialgebläserad 2 derart verbunden, dass der Fräser 3 in einem mittigen Ansatz 2a des Gebläserads 2 mittels des Gewindestücks 3a eingeschraubt ist. Der Ansatz 2a bildet eine Einheit mit dem Gebläserad 2. Auf der Unterseite des Gebläserads in Fig. 4 ragt ein Zapfen 2a' des Ansatzes 2a vor, der mit dem Fräs- bzw. Bohrkopf des Gerätes B in Eingriff tritt. Bei der Ausführungsform nach Fig. 4 ist der Fräser 3 lösbar mit dem Gebläserad 2 verbunden, sodass er bei Verschleiß ausgewechselt werden kann. Die Absaugvorrichtung A wird über dem Ansatz 1f des Gehäuses 1 fest mit dem Gerät B verbunden.

Anstelle des in einem mittigen Ansatz 2a des Gebläserades 2 eingesetzten Fräsers 3 kann auch eine Ausgestaltung vorgesehen werden, bei der der Fräser 3 direkt am Bohr- bzw. Fräskopf des Handgeräts B eingesetzt wird und auf dieses die Absaugvorrichtung A aufgesetzt wird, wobei das Gebläserad 2 beispielsweise durch Reibschluss mit dem Bohrkopf oder dem Fräser 3 angetrieben wird. Bei einer solchen Ausgestaltung kann der Fräser 3 unmittelbar am Handgerät B eingesetzt und dann die Absaugvorrichtung A am Handgerät angebracht werden.

## Patentansprüche

1. Absaugvorrichtung (A) für ein handbetätigtes Fräsgerät (B) zum Zerschneiden von Windschutzscheiben an Kraftfahrzeugen, umfassend
ein auf einen Werkzeugkopf des Fräsgerätes (B) aufsetzbares, scheibenförmiges Gehäuse (1),
in dem ein Radialgebläserad (2) drehbar gelagert ist,
das einen mittigen Ansatz (2a) aufweist,
der auf der einen Seite einen Zapfen (2a') zur Aufnahme im Werkzeugkopf des Fräsgerätes (B) und auf der gegenüberliegenden Seite eine Gewindebohrung zur Aufnahme eines Gewindestücks (3a) eines bohrerförmigen Fräsers (3) aufweist,
wobei in Achsrichtung an dem Gehäuse (1) ein teleskopartig verstellbares Absaugrohr (4) angebracht ist, durch das sich der bohrerförmige Fräser (3) erstreckt, und
in radialer Richtung an dem scheibenförmigen Gehäuse (1) ein Auffangbehälter (8) mit einem Filter (9) angeschlossen ist.

2. Absaugvorrichtung nach Anspruch 1, wobei das scheibenförmige Gehäuse (1) auf dem Umfang mit einem radial abstehenden Kanalansatz (1e) versehen ist, mit dem der aus Kunststoff gefertigte Auffangbehälter (8) verbunden ist, der einen rohrförmigen Filter (9) auf nimmt.

3. Absaugvorrichtung nach Anspruch 2, wobei der Auffangbehälter (8) ein über einen Kanalabschnitt (8a) mit dem Gehäuse (1) verbundenes Rohrstück (8b) aufweist, dessen eine Stirnseite durch eine Abdeckkappe (8c) verschließbar ist und dessen gegenüberliegende Stirnseite mit einer Austrittsöffnung (8d) versehen ist.

4. Absaugvorrichtung nach Anspruch 3, wobei die Abdeckkappe (8c) transparent ausgebildet ist.

5. Absaugvorrichtung nach einem der vorhergehenden Ansprüche, wobei das Gehäuse (1) auf einer Seite einen rohrförmigen Ansatz (1f) zur Verbindung mit dem Bohr- bzw. Fräsgerät und auf der gegenüberliegenden Seite einen rohrförmigen Ansatz (1d) zur Verbindung mit dem Absaugrohr (4) aufweist.

6. Absaugvorrichtung nach einem der vorhergehenden Ansprüche, wobei das Absaugrohr (4) einen mit dem Gehäuse (1) verbundenen Rohrstutzen (4a) und einen diesen teleskopartig übergreifenden Rohrstutzen (4b) aufweist, wobei die beiden Rohrstutzen durch einen Gummibalg (6) umschlossen sind, und eine Druckfeder (5) zwischen den beiden Rohrstutzen innerhalb des Gummibalgs (6) vorgesehen ist.

7. Handbetätigtes Bohr- bzw. Fräsgerät (B), das mit einer Absaugvorrichtung nach einem der Ansprüche 1 bis 6 versehen ist, wobei das Bohr- bzw. Fräsgerät durch einen Akku angetrieben und mit einem Handgriff (G) versehen ist.

## Claims

1. A suction device (A) for a manual milling implement (B) for cutting windscreens of motor vehicles, comprising
a disc-shaped housing (1) which is attachable at the milling head of the milling implement (B), and
in which housing a radial impeller (2) is rotatably supported,
which has a central boss (2a),
which has on the one side a pin (2a') for inserting into the milling head of the milling implement (B), and on the opposing side a tapped bore for housing a threaded part (3 a) of a drill-shaped milling cutter (3),
wherein in the axial direction, at the housing (1) a suction pipe (4) is mounted which is telescopically adjustable and through which the drill-shaped milling cutter (3) extends,
and
in the radial direction, a catchment tank (8) with a filter (9) is connected at the disc-shaped housing (1).

2. The suction device according to claim 1, wherein the disc-shaped housing (1) is provided on the circumference with a radially projecting passage neck (1e) with which the catchment tank (8) manufactured from plastic material communicates, which houses a tubular filter (9).

3. The suction device according to claim 2, wherein the catchment tank (8) has a pipe section (8b), communicating with the housing (1) via a passage section (8a), whose one front end can be closed by a covering cap (8c) and whose opposite front end is provided with an outlet opening (8d).

4. The suction device according to claim 3, wherein the covering cap (8c) is formed transparent.

5. The suction device according to one of the preceding claims, wherein the housing (1) has on one side a tubular neck (1f) for connection to the drilling or milling implement and on the opposite side a tubular neck (1d) for joining to the suction pipe (4).

6. The suction device according to one of the preceding claims, wherein the suction pipe (4) has a pipe connection (4a) joined to the housing (1) and a pipe connection (4b) overlapping the same telescopically, wherein the two pipe connections are surrounded by rubber bellows (6), and a pressure spring (5) is provided between the two pipe connections inside the rubber bellows (6).

7. A manual drilling or milling implement (B) provided with a suction device according to one of claims 1 to 6, wherein the drilling or milling implement is driven by a rechargeable battery and is provided with a handle (G).

## Revendications

1. Dispositif d'aspiration (A) pour un appareil de fraisage manuel (B) destiné à découper des pare-brise sur des véhicules automobiles, comprenant
un boîtier (1) en forme de disque, à poser sur une tête d'outil de l'appareil de fraisage (B),
dans lequel une roue de soufflante radiale (2) est montée de façon pivotante,
ladite roue présentant un embout central (2a)
qui présente sur un côté un tourillon (2a') destiné à être reçu dans la tête d'outil de l'appareil de fraisage (B) et sur le côté opposé un taraudage destiné à recevoir une pièce filetée (3a) d'une fraise (3) en forme de foret (3),
dans lequel, dans la direction axiale, un tuyau d'aspiration (4) réglable de façon télescopique est monté sur le boîtier (1), la fraise en forme de foret (3) s'étendant à travers ledit tuyau, et dans la direction radiale, un réservoir collecteur (8) avec un filtre (9) est raccordé au boîtier (1) en forme de disque.

2. Dispositif d'aspiration selon la revendication 1, dans lequel le boîtier (1) en forme de disque est muni sur la circonférence d'une embase de canal (1e) radialement saillante, à laquelle est relié le réservoir collecteur (8) réalisé en matière plastique et recevant un filtre tubulaire (9).

3. Dispositif d'aspiration selon la revendication 2, dans lequel le réservoir collecteur (8) présente une section de tuyau (8b) reliée par l'intermédiaire d'un tronçon de canal (8a) au boîtier (1) et dont une face frontale peut être fermée par un capuchon (8c) et dont la face frontale opposée est munie d'une ouverture de sortie (8d).

4. Dispositif d'aspiration selon la revendication 3, dans lequel le capuchon (8c) est réalisé de façon transparente.

5. Dispositif d'aspiration selon l'une quelconque des revendications précédentes, dans lequel le boîtier (1) présente sur un côté une embase tubulaire (1f) pour le raccordement avec l'appareil de perçage ou de fraisage et sur le côté opposé une embase tubulaire (1d) pour le raccordement avec le tuyau d'aspiration (4).

6. Dispositif d'aspiration selon l'une quelconque des revendications précédentes, dans lequel le tuyau d'aspiration (4) présente un manchon de tuyau (4a) relié au boîtier (1) et un manchon de tuyau (4b) recouvrant celui-ci de façon télescopique, les deux manchons de tuyau étant entourés d'un soufflet en caoutchouc (6) et un ressort de pression (5) étant prévu entre les deux manchons de tuyau à l'intérieur du soufflet en caoutchouc (6).

7. Appareil de perçage ou de fraisage manuel (B) muni d'un dispositif d'aspiration selon l'une quelconque des revendications 1 à 6, l'appareil de perçage ou de fraisage étant entraîné par un accumulateur et muni d'une poignée (G).
